(19) Europäisches Patentamt
European Patent Office
Office européen des brevets

(11) Veröffentlichungsnummer: **0 494 219 B1**

(12) **EUROPÄISCHE PATENTSCHRIFT**

(45) Veröffentlichungstag der Patentschrift: **03.08.94**

(51) Int. Cl.⁵: **C08G 18/36**, C08G 18/42, C09D 5/34

(21) Anmeldenummer: **90914725.8**

(22) Anmeldetag: **19.09.90**

(86) Internationale Anmeldenummer:
**PCT/EP90/01581**

(87) Internationale Veröffentlichungsnummer:
**WO 91/04998 (18.04.91 91/09)**

(54) **UNIVERSALKLEBESPACHTEL.**

(30) Priorität: **27.09.89 DE 3932171**

(43) Veröffentlichungstag der Anmeldung:
**15.07.92 Patentblatt 92/29**

(45) Bekanntmachung des Hinweises auf die Patenterteilung:
**03.08.94 Patentblatt 94/31**

(84) Benannte Vertragsstaaten:
**AT BE CH DE DK ES FR GB IT LI LU NL SE**

(56) Entgegenhaltungen:
**EP-A- 0 010 576
EP-A- 0 259 722
DE-A- 3 025 217**

(73) Patentinhaber: **Henkel Kommanditgesellschaft auf Aktien**

**D-40191 Düsseldorf(DE)**

(72) Erfinder: **GRÜNEWÄLDER, Bernhard
Niederdonker Strasse 61
D-4005 Meerbusch(DE)**
Erfinder: **PARENT, Bernhard
Auf den Kuhbenden 60
D-4000 Düsseldorf 12(DE)**
Erfinder: **KLUTH, Hermann
Degerstrasse 48
D-4000 Düsseldorf 1(DE)**
Erfinder: **WEGNER, Jürgen
Siegfriedstrasse 21
D-4000 Düsseldorf-Oberkassel(DE)**
Erfinder: **HALLER, Werner
Isarstrasse 8
D-4006 Erkrath(DE)**

## Beschreibung

Die Erfindung betrifft feinteilige Füllstoffe in hoher Pigmentvolumenkonzentration enthaltende, gewünschtenfalls lösungsmittelfreie 2-Komponenten-Polyurethan-Spachtelmassen auf Basis einer polyfunktionellen Isocyanatkomponente (B) und einer bei Raumtemperatur flüssigen Polyolkomponente (A), die aus Isocyanat-reaktive Hydroxylgruppen enthaltenden Mischungskomponenten mit einem zumindest überwiegenden Anteil an verzweigtkettigen Ester- und Ethergruppen aufweisenden Polyolen (A1) besteht, wenigstens einen Anteil der feinteiligen Füllstoffe sowie gegebenenfalls der Additive enthält und zur Applikation mit der Isocyanatkomponente (B) abgemischt und als noch formgebend verarbeitbares Gemisch appliziert wird. Desweiteren betrifft die Erfindung die Verwendung der erfindungsgemäßen Spachtelmassen.

Für die Reparatur von Bauteilen verschiedenster Materialien, bei denen Substanzverluste auszugleichen sind, werden in der Praxis unterschiedliche Spachtelmassen bzw. Füllmaterialien eingesetzt. Diese lassen sich nach der Art des verwendeten Bindemittels unterscheiden. Üblich für derartige Spachtelmassen sind wäßrige Kunststoffdispersionen, 2-Komponenten-Epoxidharze, 2-Komponenten-Polyurethansysteme, 2-Komponenten-Polyestersysteme und oxidativ vernetzende Öl- bzw. Alkydharze. Derartige Spachtelmassen haben jedoch unzureichende Klebeeigenschaften, besonders wenn die Fugendicke im Zehntelmillimeter-Bereich oder höher liegt. Außerdem sind sie oftmals aufgrund unterschiedlicher Ausdehnungskoeffizienten zu dem zu reparierenden Material stark rißanfällig und neigen dazu, sich bei Temperaturschwankungen im Flankenbereich zu lösen oder sogar zu reißen.

Andererseits gibt es eine Vielzahl von Klebstoffen, zum Teil auf Basis der bereits genannten Bindemittel, die zwar hervorragend zum flächigen Verbinden von Substraten geeignet sind, jedoch nicht oder nur mit großen Einschränkungen als Füllmaterialien zu verwenden sind. So werden z.B. für die Verklebung von Holz und Holzwerkstoffen zum überwiegenden Teil Polyvinylacetatleime eingesetzt. Voraussetzung für die Verwendung dieser Klebstoffe ist jedoch eine möglichst genaue Fugenpassung. Eine Spaltfüllung ist mit diesen Klebstoffen u.a. wegen ihrer starken Schrumpfung nicht möglich. Darüberhinaus finden in geringem Umfang Phenol-Resorcin-Harze Verwendung, die zwar durchaus gefüllt werden können, als regelrechte Spachtelmassen jedoch untauglich sind.

In steigendem Maße werden auch feuchtigkeitshärtende Ein-Komponenten-Polyurethansysteme verwendet. Diese Produkte zeigen eine mehr oder weniger ausgeprägte Schaumbildung und verfügen aufgrund dieser Volumenzunahme über fugenfüllende Eigenschaften, sind aber als Spachtelmasse nicht geeignet, da die notwendigen Festigkeiten aufgrund der Schaumstruktur nicht erreicht werden und die Rheologie dieser Systeme im allgemeinen so beschaffen ist, daß keine ausreichenden Standfestigkeiten z.B. an senkrechten Flächen erreicht werden.

Allgemein läßt sich sagen, daß Spachtelmassen im Gegensatz zu Klebstoffen ein höheres Verhältnis von Füllstoffen zu Bindemittel (Pigmentvolumenkonzentration, PVK) aufweisen, unter anderem, um eine starke Schrumpfung zu vermeiden. Enthalten diese Spachtelmassen überwiegend anorganische Füllstoffe, lassen sie sich meist mit den` üblichen Bearbeitungswerkzeugen, z.B. durch Schleifen, Sägen, Bohren usw. nur schwer und mit hohem Verschleiß der Werkzeuge bearbeiten. Die hohe Pigmentvolumenkonzentration bewirkt, daß derartige Spachtelmassen im allgemeinen keine guten Klebstoffe darstellen.

Im Bereich der Holzverarbeitung gibt es einige Ansätze füllende Spachtel mit verbesserten klebenden Eigenschaften zu entwickeln, z.B. auf Epoxidharzbasis wie in der DE 26 06 138 beschrieben. Desweiteren gibt es auf dem Markt Produkte auf Basis eines 2-Komponenten-Polyurethansystems, vgl. z.B. EP-A-10576, EP-A-259722 oder DE-A-3025217, welche jedoch eine Reihe wesentlicher Nachteile aufweisen. Dies beginnt z.B. mit der schlechten Handhabbarkeit beim Anrühren der zwei Komponenten, das heißt die Mischung läßt sich sehr schlecht homogenisieren. Desweiteren lassen sich viele Produkte nicht auf einer homogenen geschlossenen Oberfläche zu dünnen Schichten ausziehen. Außerdem ist meistens die Standfestigkeit in der Senkrechten oder über Kopf nicht ausreichend und/oder es kommt bei der Aushärtung in Folge von $CO_2$-Entwicklung, welches in einem Fall wahrscheinlich durch Reaktion der Isocyanatkomponente mit der Restfeuchte der als Füllmaterial enthaltenen Holzspäne entsteht, zu einer unerwünschten Volumenzunahme, die darüberhinaus durch die entstehende poröse Schaumstruktur die innere Festigkeit stark beeinträchtigt. Andererseits kann es auch bei einem deutlichen stöchiometrischen Überschuß von NCO-Gruppen, also bei starker Überdosierung der Isocyanatkomponente durch Reaktion mit Umgebungs- und/oder Substratfeuchte zu unerwünscht übermäßiger $CO_2$-Bildung kommen. Solche Produkte stellen keine Problemlösung für Fälle dar, bei denen Substanzverluste, z.B. an Holz oder Holzbauteilen, ausgeglichen und gleichzeitig hohe Festigkeitsanforderungen erfüllt werden müssen, wie bei der Reparatur ausgebrochener Scharniere an Türen oder beim Ersatz stark beanspruchter Bauteile, welche durch Fäulnis, Pilzbefall, Korrosion, Materialermüdung oder dergleichen zerstört oder in ihrer Funktion beeinträchtigt sind. Für spezielle Untergründe wie Metalle sind Polyurethan-Spachtelmassen nicht gebräuchlich.

Die genannten Holzspachtelmassen auf 2-Komponenten-Polyurethanbasis können beispielsweise aus Polyetherpolyolen, gefüllt mit Holzmehl oder Holzspänen als Polyolkomponente (A) und einer polyfunktionellen Isocyanatkomponente (B) z.B. Diphenylmethandiisocyanat (MDI) aufgebaut sein. Die Verarbeitbarkeit ist oftmals wegen des hohen Füllstoffgehalts und/oder wegen der Größe der Füllstoffpartikel eingeschränkt.

Zusammenfassend läßt sich sagen, daß die unterschiedlichen Anforderungen an eine Klebemasse einerseits und an eine Spachtelmasse andererseits in einem Produkt bislang nicht ohne große Einschränkungen realisierbar waren. Es besteht allerdings bei Industrie, Handel und Handwerk das Bedürfnis nach universell anwendbaren Produkten einerseits, also nach Produkten, die zum Füllen oder Kleben verwendbar sind sowie andererseits nach Produkten mit erweiterten Anwendungsmöglichkeiten also zum Füllen und Kleben, wie etwa beim Materialersatz an stark beanspruchten Konstruktionsteilen.

Aufgabe der vorliegenden Erfindung ist es daher, einen Universalklebespachtel zu schaffen, der nicht die geschilderten Nachteile bislang bekannter Klebespachtel aufweist, sondern die ebenfalls geschilderten positiven Eigenschaften von Füllspachteln einerseits und Klebstoffen andererseits in sich vereint, wie
- hohe Wasserbeständigkeit (bei Holzwerkstoffen mindestens B3 nach DIN 68 602)
- hohe Wärmestandfestigkeit
- hohe Klebefestigkeit, insbesondere im Flankenbereich
- hohe Volumenstabilität
- hohe Pigmentvolumenkonzentration
- hohe Elastizität
- gute Verarbeitbarkeit bis zu mehreren Zentimetern Schichtdicke
- hohe Standfestigkeit während der Verarbeitung und des Aushärtungsprozesses
- glatte geschlossene Struktur der Oberfläche
- gute Bearbeitbarkeit der ausgehärteten Masse durch alle spanabhebenden Methoden
- überstreichbar mit allen handelsüblichen Anstrichsystemen
- beliebig einfärbbar durch Pigmente.

Die technische Lösung dieser Aufgabe geht aus von feinteiligen Füllstoffen in hoher Pigmentvolumenkonzentration enthaltende, gewünschtenfalls lösungsmittelfreie 2-Komponenten-Polyurethan-Spachtelmassen mit einer Füllstoffkonzentration von 40 bis 70 Gew.-%, bezogen auf die Summe von Polyolkomponente (A) plus Füllstoffe, auf Basis einer polyfunktionellen Isocyanatkomponente (B) und einer bei Raumtemperatur flüssigen Polyolkomponente (A), die aus Isocyanat-reaktive Hydroxylgruppen enthaltenden Mischungskomponenten mit einem zumindest überwiegenden Anteil an verzweigtkettigen Ester- und Ethergruppen aufweisenden Polyolen (A1) besteht, wenigstens einen Anteil der feinteiligen Füllstoffe sowie gegebenenfalls der Additive enthält und zur Applikation mit der Isocyanatkomponente (B) abgemischt und als noch formgebend verarbeitbares Gemisch appliziert wird.

Die Erfindung ist dadurch gekennzeichnet, daß zur Ausbildung eines weitgehend wasserfesten, elastischen Universalklebespachtels, der hohe Klebefestigkeit mit hoher Volumenstabilität verbindet, die Polyolkomponente (A) als zusätzliche Mischungskomponente (A2) bei Raumtemperatur flüssige Glycerinester mit einer OH-Funktionalität von wenigstens 2 bis 3 auf Basis langkettiger, gegebenenfalls olefinisch ungesättigter Fettsäuren, die wenigstens zum überwiegenden Teil OH-substituiert sind und gewünschtenfalls als weitere zusätzliche Mischungskomponente (A3) niedrigviskose, bei Raumtemperatur zumindest schwerflüchtige monofunktionelle Alkohole ausgeprägt oleophilen Charakters mit mindestens 8 C-Atomen in Abmischung mit der Mischungskomponente (A1) enthält.

Reaktionsklebstoffsysteme auf der Basis von Polyhydroxyverbindungen bzw. Polyolverbindungen und polyfunktionellen Isocyanaten sind in der modernen Klebetechnik als 2-Komponenten-Polyurethan-Bindemittel gut bekannt. Derartige 2-Komponenten-Polyurethan-Systeme dienen auch als Bindemittel für Spachtelmassen, welche üblicherweise feinteilige Füllstoffe in hoher Pigmentvolumenkonzentration enthalten. Gewünschtenfalls können derartige Spachtelmassen lösungsmittelfrei formuliert werden. Die Polyolkomponente (A) ist dabei aus Gründen der Verarbeitbarkeit bei Raumtemperatur flüssig und besteht aus verzweigtkettigen Ester- und Ethergruppen aufweisenden Polyolen (A1) sowie gegebenenfalls untergeordneten Mengen weiterer Isocyanatreaktiven Hydroxylgruppen enthaltenden Mischungskomponenten. Diese weiteren Mischungskomponenten können z.B. Polyesterpolyole und/oder Polyetherpolyole sein. Die Polyolkomponente (A) enthält darüberhinaus bei Spachtelmassen wenigstens einen Anteil der feinteiligen Füllstoffe sowie gegebenenfalls der Additive. Zur Applikation wird die Polyolkomponente (A) mit der Isocyanatkomponente (B) abgemischt und als noch formgebend verarbeitbares Gemisch appliziert. (A) und (B) werden auch als Reaktivkomponenten bezeichnet.

Die Ester- und Ethergruppen aufweisenden Polyole (A1), auch Polyether/Polyester-Polyole genannt, werden deshalb gewählt, weil sie die Vorteile von Polyesterpolyolen mit den Vorteilen von Polyetherpolyolen verbinden. Von den Polyestergruppen ist bekannt, daß sie in derartigen Klebstoffsystemen eine hohe Adhäsion an die zu verklebenden Substrate bewirken. Nachteilig ist, daß Polyestergruppen die Viskosität erhöhen, so daß die Formulierung niedrigviskoser, gut verarbeitbarer Klebespachtel erschwert ist. Dies trifft insbesondere dann zu, wenn größere Mengen von Füllstoffen enthalten sind, was z.B. zur Erzielung standfester Spachtelmassen erforderlich ist. Polyetherpolyole weisen im Gegensatz zu Polyesterpolyolen deutlich niedrigere Viskositäten bei ähnlichen Molekulargewichten auf. Nachteilig ist, daß Polyethergruppen besonders hydrophil sind, wodurch solche Klebstoffsysteme während der Herstellung, Lagerung und/oder Verarbeitung leicht Wasser aus der Luft und/oder aus dem Substrat absorbieren. Hierdurch kann es bei der Aushärtung zur Bildung poröser Klebefilme kommen, wodurch die Kohäsion verringert wird. Verzweigtkettige Ester- und Ethergruppen aufweisende Polyole (A1) bilden hier also aus anwendungstechnischer Sicht ein Eigenschaftsoptimum, welches allerdings den genannten hohen Anforderungen für Universalklebespachtel nicht genügt.

Zur Ausbildung eines erfindungsgemäßen, weitgehend wasserfesten, elastischen Universalklebespachtels, der hohe Klebefestigkeit mit hoher Volumenstabilität verbindet, enthält deshalb die Polyolkomponente (A) als weitere Mischungskomponente (A2) Oleo-Polyole mit einer OH-Funktionalität von wenigstens 2 bis etwa 3 und gewünschtenfalls als Mischungskomponente (A3) niedrigviskose, bei Raumtemperatur zumindest schwer-flüchtige monofunktionelle Alkohole ausgeprägt oleophilen Charakters in Abmischung mit den Polyolen (A1).

Da die Polyolkomponente (A) bei Raumtemperatur aus Gründen der guten Verarbeitbarkeit flüssig ist, andererseits eine hohe Standfestigkeit des Klebespachtels gefordert ist, werden Polyole (A1) mit einer Viskosität im Bereich von etwa 3000 bis 5000 mPas bei 20 °C bevorzugt. Aus sicherheitstechnischen Gründen können solche Polyole (A1) bevorzugt sein, deren Flammpunkt über 200 °C liegt. Um eine Spachtelmasse hinreichender Festigkeit zu erhalten, besitzen in einer besonderen Ausführungsform die Polyole (A1) bei einer mittlerer Funktionalität von etwa 2,4 bis 2,6 eine OH-Zahl von 120 bis 200, vorzugsweise 165 ± 5.

Es kann sich als besonders vorteilhaft erweisen, wenn dabei die Polyole (A1) ein mittleres Äquivalentgewicht von 300 bis 380 aufweisen. Gemäß einer besonderen Ausführungsform der Polyole (A1) ist die Anzahl der darin enthaltenen Estergruppen so gewählt, daß eine Verseifungszahl von 145 ± 5 erreicht wird. Derartige Polyole (A1) im genannten Viskositäts- und Funktionalitätsbereich führen mit der Isocyanatkomponente (B) zu Polyurethanen, die als Bestandteil der Spachtelmasse einerseits hinreichend vernetzt sind und damit für den inneren Zusammenhalt und eine gewisse Härte verantwortlich zeichnen und eine nicht allzu große Sprödigkeit aufweisen. Sie sind darüber hinaus überwiegend wasserabweisend, also wenig feuchtigkeitsempfindlich und können auf dem Markt als kommerzielles Produkt erhalten werden, z.B. unter den Handelsnamen Sovermol[R] POL 1080 V (Fa. Henkel KGaA) und Desmophen[R] 1150 (Fa. Bayer AG).

Um einen Klebespachtel zu erhalten, der weitgehend wasserfest ist werden solche Polyole bzw. Mischungskomponenten (A1), (A2), (A3) bevorzugt, die zumindest überwiegend oleophilen bzw. hydrophoben Charakters, das heißt wasserabweisend sind. Als zusätzliche Mischungskomponente (A2) sind deshalb Oleo-Polyole mit einer OH-Funktionalität von wenigstens 2 bis etwa 3 enthalten.

Unter Oleo-Polyolen oder auch oleochemischen Polyolen versteht man im allgemeinen Polyole, die auf der Basis natürlicher Öle und Fette hergestellt wurden. Sie weisen u.a. aufgrund der knapper werdenden Erdölressourcen den Vorteil auf, daß sie aus regenerierbaren Rohstoffen herstellbar sind. In speziellen Fällen kann es auch bevorzugt sein, als oleochemische Polyole Reaktionsprodukte epoxydierter Fettstoffe mit Alkoholen einzusetzen.

Bevorzugte Oleo-Polyole sind Glycerinester langkettiger Fettsäuren die wenigstens zum überwiegenden Teil OH-substituiert sind. Wie dem Fachmann bekannt ist, sind derartige Fettsäureglycerinester als besonders oleophil bzw. hydrophob einzustufen. Aus Gründen der besseren Verarbeitbarkeit werden erfindungsgemäß Fettsäureglycerinester gewählt, die bei Raumtemperatur flüssig sind. Gegebenenfalls können die Fettsäuren der Fettsäureglycerinester zumindest teilweise olefinisch ungesättigt sein.

In einer besonderen Ausführungsform liegt als Mischungskomponente (A2) Rizinusöl vor. Bevorzugt wird dabei ein Rizinusöl mit einer OH-Zahl von 165 ± 5 bei einer OH-Funktionalität von 2,5 bis 3. Damit bei der späteren Reaktion mit Isocyanaten durch möglicherweise enthaltenes Wasser eine unerwünschte $CO_2$-Bildung vermieden wird, ist das Rizinusöl vorzugsweise gedämpft und entwässert. Rizinusöl der genannten Spezifikation weist eine Viskosität im Bereich von 950 bis 1100 mPas auf, trägt daher in Abmischung mit den Polyolen (A1) zur Senkung der Viskosität und damit zu einer besseren Verarbeitbarkeit dieser Mischung bei. Darüberhinaus ist Rizinusöl gänzlich in Wasser unlöslich, also stark hydrophob und weist einen Flammpunkt von über 250 °C auf. Rizinusöl wirkt einer Versprödung des ausgehärteten Klebespachtels entgegen. In einer speziellen Ausführungsform kann ein Rizinusöl mit einer OH-Funktionalität von etwa 2,7 bevorzugt sein.

Als weitere zusätzliche Mischungskomponente (A3) sind in der Polyolkomponente (A) erfindungsgemäß gewünschtenfalls niedrigviskose, bei Raumtemperatur zumindest schwer-flüchtige monofunktionelle Alkohole ausgeprägt oleophilen Charakters enthalten. Über den Anteil der monofunktionellen Alkohole läßt sich unter anderem die Viskosität der Polyolkomponente (A) einstellen. Bevorzugt werden deshalb Alkohole (A3), die bei 20 °C eine Viskosität von 30 bis 250 mPas, vorzugsweise 50 bis 150 mPas aufweisen. Da diese Alkohole wie weiter oben ausgeführt einen ausgeprägt oleophilen Charakter haben sollen und darüber hinaus zumindest schwer-flüchtig sein müssen, werden verzweigte Alkohole mit wenigstens 8 C-Atomen bevorzugt. Da der oleophile Charakter und die Schwerflüchtigkeit mit steigender Kettenlänge zunimmt, werden verzweigte Alkohole mit wenigstens 12 C-Atomen, insbesondere aber solche mit wenigstens 16 C-Atomen, besonders bevorzugt.

Die Menge und Art der gewünschtenfalls enthaltenen Mischungskomponente (A3) beeinflußt auch die Elastizität des ausgehärteten Klebespachtels. Vorzugsweise liegen deshalb als (A3) verzweigte aliphatische Alkohole mit OH-Zahlen von etwa 160 bis 200 vor. Besonders günstige Ergebnisse zeigt 2-Octyl-Dodecanol-1, insbesondere als technischer Guerbetalkohol, und stellt daher eine besonders bevorzugte Variante dar. Dieser Alkohol weist sich durch eine geringe Flüchtigkeit und eine ausgezeichnete Oxidationsstabilität aus und besitzt eine Viskosität von ca. 60 mPas bei 20 °C. Der Vorteil derartiger Alkohole liegt desweiteren darin begründet, daß sie eine ähnliche Wirkung wie Weichmacher z.B. Alkylsulfonsäureester hervorrufen, jedoch im Gegensatz zu diesen nicht mit der Zeit ausgewaschen werden können, da sie fest einreagiert sind und so dem ausgehärteten Klebespachtel eine dauerhafte Elastizität verleihen.

Wie bereits erwähnt, hängen die anwendungstechnischen Eigenschaften des Klebespachtels nicht nur von der Art der gewählten Mischungskomponenten (A1), (A2) und (A3) ab, sondern auch von deren Verhältnis im Polyolgemisch (A). Besonders gute Ergebnisse liefert ein Mischungsverhältnis (Gewichtsteile) von (A1) : (A2) im Bereich von 10 : 1 bis 5 : 1 und wird deshalb bevorzugt. Bei einer besonderen Ausführungsform liegt das bevorzugte Mischungsverhältnis von (A1) : (A2) im Bereich von 7 : 1 bis 8 : 1. Bei Mitverwendung der gewünschtenfalls vorliegenden monofunktionellen Alkohole (A3) lassen sich hinsichtlich der Verarbeitbarkeit und der Elastizität des Holzklebespachtels besonders gute Ergebnisse erzielen, wenn das Mischungsverhältnis (in Gewichtsteilen) der Summe von (A1) plus (A2) im Verhältnis zu (A3) im Bereich von 90 : 10 bis 99 : 1 liegt. Ein besonders bevorzugtes Mischungsverhältnis von ((A1) + (A2)) : (A3) liegt im Bereich von 95 : 5 bis 97 : 3.

Zur Einstellung und Optimierung bestimmter anwendungstechnischer Parameter wie Topfzeit, Viskosität, Durchhärtungszeit, Vernetzungsgrad und Elastizität ist nicht nur das Verhältnis der Polyolkomponenten zueinander von Wichtigkeit, sondern auch das Verhältnis der Polyolkomponente (A) zu der Isocyanatkomponente (B) sowie die Wahl der geeigneten Isocyanatkomponente. Bevorzugt einsetzbare Isocyanatverbindungen sind aliphatische Diisocyanate und/oder aromatische Diisocyanate. Die aliphatischen Verbindungen können auch monocyclisch oder polycyclisch sein. In einer besonderen Ausführungsform werden als Reaktivkomponente (B) polyfunktionelle Isocyanate, insbesondere mit einer Funktionalität von etwa 2,0 bis 2,6 eingesetzt. Besonders bevorzugt werden polyfunktionelle Isocyanate mit einer Funktionalität von 2,3 bis 2,5. Unter den aromatischen Isocyanatverbindungen wird außer Toluylendiisocyanat bevorzugt Diphenylmethan-4,4'-diisocyanat (MDI) eingesetzt. Besonders geeignet ist technisches Diphenylmethandiisocyanat mit einem Isomerengemisch höher funktioneller Diisocyanate, wobei jedoch MDI die Hauptkomponente bildet. Derartiges technisches MDI hat vorzugsweise einen NCO-Gehalt von etwa 31 Gew.-%. Für spezielle Anwendungsgebiete kann auch Xylylendiisocyanat sowie eine Vielzahl aliphatischer Isocyanate der Funktionalität 2 und größer eingesetzt werden. Geeignet sind Isophorondiisocyanat und Dicyclohexylmethandiisocyanat als cyclische aliphatische Diisocyanate. Es können auch aliphatische geradkettige Diisocyanate, wie sie durch Phosgenisierung von Diaminen gewonnen werden, z.B. Tetramethylendiisocyanat oder Hexamethylendiisocyanat eingesetzt werden. Geeignet sind auch oligomerisierte Diisocyanate, sogenannte Isocyanurate.

Die erfindungsgemäß bevorzugten, in dem Klebespachtel enthaltenen Mengen an Reaktivkomponente (A) und (B) bilden ein Molverhältnis von NCO- zu OH-Gruppen von 100 : 100 bis 110 : 100. Besonders gute Ergebnisse zeigen geringfügige Überschüße an NCO-Gruppen. Deshalb wird ein Molverhältnis von NCO- zu OH-Gruppen von 104 : 100 bis 106 : 100 besonders bevorzugt.

Wie bereits dargestellt, weisen Spachtelmassen im Gegensatz zu Klebstoffen im allgemeinen ein höheres Verhältnis von Füllstoffen zu Bindemittel (Pigmentvolumenkonzentration) auf. Um eine besonders hohe Volumenstabilität zu erreichen ist es notwendig, daß die Füllstoffe, die zumindest anteilsweise in der Polyolkomponente (A) enthalten sind, mengenmäßig optimal auf die entsprechende Menge Polyolkomponente (A) abgestimmt sind. Erfindungsgemäß wird ein Anteil an Füllstoffen von 40 bis 70 Gew.-%, insbesondere von 50 bis 60 Gew.-%, jeweils bezogen auf die Summe von Polyolkomponente (A) plus Füllstoffe, bevorzugt.

Aus Gründen der besseren Verarbeitbarkeit enthält das Füllstoffgemisch als mindestens einen Anteil globuläre Partikel auf Glas- und/oder Kunststoffbasis. Derartige globuläre Partikel bewirken einen sogenannten Kugellagereffekt. Dadurch wird nicht nur das Vermengen der beiden Reaktivkomponenten kurz vor der Applikation wesentlich erleichtert sondern auch die Handhabbarkeit der angerührten erfindungsgemäßen Spachtelmasse. So werden z.B. beim Verstreichen, Spachteln oder Ausziehen des Universalklebespachtels zu dünnen Schichten weitaus geringere Scherkräfte benötigt, als bei einem gleichartigen Klebespachtel mit ausschließlich nicht-globulären Partikeln. Der Fachmann spricht hier von einer erhöhten Geschmeidigkeit des Spachtels. Besonders geeignet im Sinne der Erfindung sind deshalb Füllstoffgemische bei denen die globulären Partikel auf Glas- und/oder Kunststoffbasis mindestens 10 Vol.-%, insbesondere jedoch etwa 30 bis 80 Vol.-%, des Füllstoffgemisches ausmachen. Vorzugsweise sind in dem Füllstoffgemisch 35 bis 55 Vol.-% globuläre Partikel enthalten, da bei diesem Anteil ein optimales Verhältnis von Geschmeidigkeit und Standfestigkeit des anwendungsfertigen Universalklebespachtels vorliegt.

Bevorzugterweise sind als globuläre Partikel Hohlkugeln enthalten. Sie bieten gegenüber Massivkugeln den wesentlichen Vorteil der Gewichtsersparnis, das heißt der fertige Universalklebespachtel hat bei der Verwendung von Hohlkugeln eine deutlich geringere Dichte. Außerdem verleihen Hohlkugeln dem ausgehärteten Klebespachtel eine zusätzliche Elastizität gegenüber Druckbelastungen. Als erfindungsgemäß bevorzugt geeignet haben sich Hohlkugeln mit einem mittleren Durchmesser im Bereich von etwa 10 bis 150 $\mu$m erwiesen. Für hohe und höchste Ansprüche an den ausgehärteten Spachtel und gleichzeitig an die Geschmeidigkeit des gebrauchsfertigen Spachtels hat es sich als zweckmäßig erwiesen, daß der mittlere Durchmesser der Hohlkugeln im Bereich von 40 bis 100 $\mu$m, vorzugsweise im Bereich von 50 bis 70 $\mu$m liegt.

Neben einer erheblichen Reduzierung der Dichte des Klebespachtels sowie einer erhöhten Elastizität führt die Verwendung von Hohlkugeln zu einer größeren Schlagfestigkeit und einer erhöhten Biegefestigkeit. Die Standfestigkeit des nicht-ausgehärteten Spachtels wird verbessert. Für spezielle Anwendungen kann es von Vorteil sein, daß die Verwendung von Hohlkugeln auch andere Eigenschaften des Spachtels verbessert wie z.B. eine verbesserte thermische und akustische Isolation, verbesserte dielektrische Eigenschaften und eine reduzierte Wasseraufnahme. Im Sinne der Erfindung besonders geeignet sind Mikrohohlkugeln aus Borsilikatglas, da mit ihnen die vorstehend beschriebenen Verbesserungen erreicht werden können. Eine weitere Dichtereduktion sowie eine nochmals verbesserte Standfestigkeit erhält man, wenn man erfindungsgemäß bevorzugte Mikrohohlkugeln aus thermoplastischen Kunststoffen einsetzt. Darüberhinaus bieten Kunststoffhohlkugeln den Vorteil, daß bei der Bearbeitung des ausgehärteten Universalklebespachtels mit spanabhebenden Methoden der Werkzeugverschleiß deutlich geringer ist als bei der Verwendung von Glas-Hohlkugeln. Besonders bevorzugt sind Mikrohohlkugeln auf Polyvinylidenchlorid-(PVDC)-Basis. Sowohl Mikrohohlkugeln aus verschiedenen Gläsern als auch aus verschiedenen thermoplastischen Kunststoffen sind dem Fachmann bekannt, seit längerem im Handel und eignen sich für die vorliegende Erfindung. Selbstverständlich können auch Mischungen von Glashohlkugeln und Kunststoffhohlkugeln eingesetzt werden.

Darüberhinaus kann das Füllstoffgemisch auch weitere feinteilige, gegebenenfalls nicht-globuläre Partikel aus anorganischem Material und/oder Kunststoffen enthalten. Hier sind besonders mineralische Stoffe, vorzugsweise gecoatete mineralische Stoffe, geeignet. Dem Fachmann ist das Coaten von feinteiligen mineralischen Stoffen bekannt. In der Praxis haben sich z. B. Fettsäuren als geeignete Coatingmittel erwiesen. Derartig gecoatete Mineralstoffe lassen sich wesentlich besser mit den anderen Komponenten des Universalklebespachtels verarbeiten, z.B. leichter in die Polyolkomponente (A) einbringen. Desweiteren erbringen sie gegenüber nicht-gecoateten Mineralstoffen einen rheologischen Effekt, der zu einer erhöhten Standfestigkeit der Spachtelmasse führt. Als mineralischer Stoff besonders geeignet ist Kreide, insbesondere gecoatete Kreide. Es hat sich erwiesen, daß ein aus Lösung gefälltes und mit 2 bis 3 Gew.-% Fettsäure gecoatetes Calciumcarbonat als Füllstoff eine wesentlich bessere Wasserbeständigkeit des Spachtels bewirkt als eine gecoatete, natürlich vorkommende Kreide. Deshalb wird eine derartige, frisch gefällte Kreide bevorzugt, insbesondere, wenn die mittlere Größe der Kreideteilchen im Bereich von 0,5 bis 1 $\mu$m liegt.

Desweiteren sind als gegebenenfalls nicht-globuläre Partikel Kunststoff-Pulver geeignet. Derartige Pulver sind dem Fachmann seit langem bekannt, z.B. auf der Basis von Polyvinylacetat. Im Sinne der Erfindung besonders bevorzugt sind Polyvinylchlorid-(PVC)-Pulver.

Auch hier führt der Einsatz von Füllstoffen auf Kunststoffbasis zu einer Reduzierung der Dichte des Universalklebespachtels sowie bei der Bearbeitung des ausgehärteten Spachtel zu einem geringeren Verschleiß der spanabhebenden Werkzeuge. Die vorgenannten feinteiligen, gegebenenfalls nicht-globulären Partikel können also sowohl mineralische Stoffe sein als auch Kunststoffe oder Kombinationen daraus.

Eine bevorzugte Ausführung des Klebespachtels enthält ein Füllstoffgemisch, in dem anteilsweise ein Trockenmittel enthalten ist. Wie bereits ausgeführt ist es nicht erwünscht, daß die Isoyanatkomponente (B) mit Wasser zur Reaktion kommt, um eine $CO_2$-Bildung zu vermeiden. Die anderen Komponenten, insbesondere die Polyolkomponente (A), sollten deshalb zumindest weitgehend wasserfrei sein. Dies kann durch ein solches, dem Fachmann bekanntes Trockenmittel z.B. Calciumoxid gewährleistet werden. Dies gilt insbesondere dann, wenn das Trockenmittel zumindest anteilsweise in der Polyolkomponente (A) enthalten ist. Ein bevorzugtes Trockenmittel ist wenigstens anteilsweise von Kristallwasser befreites Zeolith A, wobei dessen Anteil bevorzugt bis zu 20 Gew.-% des Füllstoffgemisches ausmacht. Derartige Trockenmittel sind auch als Molekularsiebe bekannt. Es können also gängige Molekularsiebe als Trockenmittel verwendet werden, insbesondere wenn deren Mikroporendurchmesser im Bereich von 0,3 nm liegt. Es können auch sogenannte organische Trockenmittel enthalten sein, die mit Wasser abreagieren wie z.B. Verbindungen aus der Klasse der Oxazolidine. Vorzugsweise sind Menge und Volumen der Füllstoffe der gefüllten Polyolkomponente (A) so abgestimmt, daß ein Verhältnis von etwa 6 : 1 Volumenanteilen (A) : (B) den anwendungsfertigen Universalklebespachtel ergibt, wenn Komponente (B) keine Füllstoffe enthält.

Die Reaktivkomponente (B) enthält in einer bevorzugten Ausführungsform zumindest anteilsweise nichtreaktive Komponenten. Dazu zählen insbesondere die Füllstoffe. Vorteilhafterweise ist zumindest ein Anteil der globulären Partikel, insbesondere der Hohlkugeln, in der Reaktivkomponente (B) enthalten. Eine bevorzugte Version des Universalklebespachtels ist so gestaltet, daß die Reaktivkomponente (A) und die Reaktivkomponente (B) jeweils Füllstoffe in Mengen enthalten, die so gewählt sind, daß eine Mischung der gefüllten Komponenten (A) und (B) im Verhältnis von etwa 3 : 1 bis 1 : 1 Volumenanteilen den anwendungsfertigen Universalklebespachtel ergibt. Dabei kann es von Vorteil sein, daß die Komponente (B) den Hauptanteil der globulären Partikel, insbesondere, wenn es sich um Hohlkugeln handelt, enthält. Aus Gründen der Anwenderfreundlichkeit sind glatte Mischungsverhältnisse von Volumenanteilen von (A) : (B) bevorzugt, wie etwa 3 :1, 5 : 2, 2 : 1, 3 : 2 oder 1 : 1.

Vorzugsweise enthält der Universalklebespachtel zusätzlich als Additiv übliche Reaktionsbeschleuniger. Als Beschleuniger sind hierbei z.B. tertiäre Basen, wie Bis-(N,N,-dimethylamino)-diether, Dimethylaminocyclohexan, N,N-Di-methyl-benzylamin, N-Methylmorpholin sowie die Umsetzungprodukte von Dialkyl-($\beta$-hydroxyethyl)-amin mit Monoisocyanaten und Veresterungsprodukte von Dialkyl-($\beta$-hydroxyethyl)-amin und Dicarbonsäuren geeignet. Ein weiterer wichtiger Beschleuniger ist das 1,4-Diamino-bicyclo-(2.2.2)-octan. Ferner können nichtbasische Substanzen als Beschleuniger verwendet werden. Vorzugsweise sind Organo-Metallverbindungen beispielsweise des Zinns, des Quecksilbers und/oder des Wismuts enthalten, wie Zinn-(II)-(2-ethylhexoat) und Dibutyl-zinn-dilaurat. Andere geeignete Organo-Metallverbindungen sind z.B. Eisenpentacarbonyl, Nickeltetracarbonyl, Eisenacetylacetonat und Molybdänglycolat. Von den Organo-Verbindungen des Zinns werden u.a. unter toxikologischen Gesichtspunkten insbesondere die Dialkylzinnmercaptide bevorzugt, da diese in den erfindungsgemäßen Spachtelmassen besonders gute reaktionsbeschleunigende Eigenschaften aufweisen.

Vorteilhafterweise enthalten die erfindungsgemäßen Universalklebespachtel zusätzlich weitere übliche Additive. Dies können u.a. Verdicker, Alterungsschutzmittel, Weichmacher, Pigmente, Thixotropiermittel und/oder UV-Schutzmittel sein. Auch Stabilisatoren, Flammschutzmittel, Verzögerer und gegebenenfalls Lösungsmittel fallen hier unter den Begriff Additive. Als Verdicker kommen z.B. gängige anorganische Verdickungsmittel wie Schichtsilikate, Bentone und/oder Montmorillonite in Betracht. Als Weichmacher können z.B. die bereits genannten Alkylsulfonsäureester eingesetzt werden. Gängige Pigmente sind z.B. Ruß und Titandioxid. Als Thixotropiermittel für isocyanathaltige Systeme sind z.B. aromatische Diamine geeignet. Diese reagieren mit den NCO-Gruppen zu Produkten, die den Thixotropieeffekt bewirken. Als UV-Absorber kann z.B. Benztriazol eingesetzt werden.

Die Additive können in der Polyolkomponente (A) und/oder in der Isocyanatkomponente (B) vorliegen. Enthält die Komponente (B) Füllstoffe, insbesondere Hohlkugeln, so wird bevorzugt, daß auch Thixotropiermittel und/oder Verdicker in (B) enthalten sind.

Da es sich bei dem vorliegenden Universalklebespachtel um ein 2-Komponenten-Produkt handelt, das nach dem Vermischen der Reaktivmassen (A) und (B) und nach einer einzustellenden Topfzeit, in der die Masse noch verarbeitbar ist, zu einem festen Material aushärtet, werden die beiden Reaktivkomponenten (A) und (B) zusammen mit den darin eingearbeiteten Füllstoffen und gegebenenfalls Additiven bis zur Vermischung und Applikation wasserfrei und getrennt voneinander gelagert. Besonders bewährt für die Lagerung dieser beiden Komponenten haben sich Wasserdampf undurchlässige Verpackungen, welche somit bevorzugt sind. Als Wasser undurchlässige Verpackungen kommen eine Vielzahl von Formen und Materialien in Frage wie z.B. Weißblechdosen, Metall- oder Kunststofftuben oder das Einschweißen der Produkte in Folien oder Kombinationen der vorgenannten Möglichkeiten. Bevorzugt sind solche Verpackungen, die wiederverschließbar sind und somit eine Teilentnahme der Reaktivkomponenten ermöglichen. Des weiteren sind insbesondere solche Verpackungsmaterialien bevorzugt, die für sämtliche Inhaltsstoffe der Reaktivkomponenten undurchlässig sind, von diesen nicht angegriffen und/oder sonstwie in ihrer Funktion beeinträchtigt werden.

Die erfindungsgemäßen Universalklebespachtel werden zum Füllen und/oder Verkleben von Holz, Kunststoff, Metall und/oder anderen festen Werkstoffen verwendet. Durch Art und Menge der enthaltenen Komponenten können wie beschrieben die Parameter des Klebespachtels wie Topfzeit, Viskosität usw. so eingestellt werden, daß bei Raumtemperatur, also bei 10°C bis 30°C eine optimale Anwendung gewährleistet ist. In Einzelfällen kann der Klebespachtel jedoch auch außerhalb dieses Temperaturbereichs verwendet werden, wenn dabei der Einfluß der Temperatur auf die anwendungsrelevanten Parameter berücksichtigt wird.

Besonders geeignet ist der Klebespachtel für Holz und Holzwerkstoffe. So können z.B. alte Möbel mit Hilfe dieses Spachtels in hervorragender Weise aufgearbeitet werden. Es können z.B. gelöste Verbindungen wieder neu gefügt und klebend verbunden werden und gegebenenfalls gleichzeitig Materialverlust ausgeglichen werden. Klebefugen bis zu mehreren Zentimetern Dicke können hergestellt werden. Der Spachtel kann aber auch nur zum Ausgleich von Substanzverlust verwendet werden. Auch andere Materialien können mit Hilfe des Universalklebespachtels verklebt werden wie z.B. keramische Kacheln auf Putz oder auf Holz, wobei auch die Spachtelmasse zum Verfugen der Kacheln verwendet werden kann. Die genannten Materialien können nicht nur mit gleichartigen Materialien sondern auch mit anderen genannten Materialien mittels des Universalklebespachtels dauerhaft verbunden werden. Desweiteren können Einsatzmöglichkeiten für den Universalklebespachtel im Baubereich liegen, wo dieser als Putz oder Mörtel oder als Ausgleichsmasse verwendet werden kann. Auch beim Verlegen von Bodenbelägen wie z.B. Kunststoffböden kann die erfindungsgemäße Spachtelmasse zum dauerhaften Fixieren des Bodenbelags am Untergrund dienen. Die universellen Einsatzmöglichkeiten sowie entsprechende zugehörige Testverfahren werden im Folgenden durch einige ausgewählte Beispiele erläutert.

Beispiele

Alle folgenden erfindungsgemäßen Beispiele enthalten in der Polyolkomponente (A) folgende Bestandteile:

| | |
|---|---|
| Sovermol[R] POL 1080 V als Komponente (A1) | 38,3 Gewichtsteile |
| gedämpftes Rizinusöl als Mischungskomponente (A2) | 5,1 Gewichtsteile |
| 2-Octyldodecanol-1 (technisch) als Mischungskomponente (A3) | 1,7 Gewichtsteile |
| Zeolith A als Trockenmittel | 8,6 Gewichtsteile |

sowie katalytisch wirksame Mengen an Dialkylzinnmercaptid (0,0003 bis 0,001 Gewichtsteile).

Beispiel 1

enthält darüber hinaus
43,3 Gewichtsteile aus Lösung gefälltes, mit Fettsäure gecoatetes Calciumcarbonat,
3 Gewichtsteile Borsilikat-Glashohlkugeln und wurde mit
18 Gewichtsteilen technischem MDI vermengt
(NCO/OH-Verhältnis 1 : 1).

Beispiel 2

enthält darüber hinaus
43,3 Gewichtsteile aus Lösung gefälltes, mit Fettsäure gecoatetes Calciumcarbonat
3 Gewichtsteile Borsilikat-Glashohlkugeln und wurde mit
19 Gewichtsteilen technischem MDI vermengt
(NCO/OH- Verhältnis 1,06 : 1).

Beispiel 3

enthält darüber hinaus
46,3 Gewichtsteile aus Lösung gefälltes, mit Fettsäure gecoatetes Calciumcarbonat und wurde mit

18 Gewichtsteilen technischem MDI vermengt
(NCO/OH-Verhältnis 1 : 1).

Beispiel 4

enthält darüber hinaus
20 Gewichtsteile aus Lösung gefälltes, mit Fettsäure gecoatetes Calciumcarbonat,
23,3 Gewichtsteile PVC-Kunststoff-Pulver,
3 Gewichtsteile Borsilikat-Glashohlkugeln und wurde mit
18 Gewichtsteilen technischem MDI vermengt
(NCO/OH-Verhältnis 1 : 1).

Beispiel 5

enthält darüber hinaus
45,67 Gewichtsteile aus Lösung gefälltes, mit Fettsäure gecoatetes Calciumcarbonat,
0,63 Gewichtsteile PVDC-Kunststoff-Hohlkugeln und wurde mit
18 Gewichtsteilen technischem MDI vermengt
(NCO/OH-Verhältnis 1 : 1).

Bei den erfindungsgemäßen Beispielen 1 bis 5 sind die Füllstoffe in der Reaktivkomponente (A) eingearbeitet.

Beispiel 6

enthält darüber hinaus
46 Gewichtsteile aus Lösung gefälltes, mit Fettsäure gecoatetes Calciumcarbonat in Komponente (A).
0,63 Gewichtsteile PVDC-Kunststoff-Hohlkugeln und
0,113 Gewichtsteile eines aromatischen Diamins
(Verdickungsmittel),
sind lagerstabil in technisches MDI eingearbeitet worden (Reaktivkomponente (B) ).
Um einen anwendungsfertigen, erfindungsgemäßen Universalklebespachtel zu erhalten, wurden die Reaktivkomponenten (A) und (B) innig miteinander vermengt.

Vergleichsbeispiel 1 (nicht erfindungsgemäß)

enthält
48,77 Gewichtsteile Komponente (A1) (wie vorstehend),
3,06 Gewichtsteile Borsilikat-Glashohlkugeln,
4,38 Gewichtsteile Zeolith-A-Pulver als Trockenmittel,
katalytisch wirksame Mengen Dialkylzinnmercaptid sowie
40,79 Gewichtsteile einer natürlich vorkommenden, mit Fettsäure gecoateten Kreide und wurde mit
19,5 Gewichtsteilen technischem MDI innig vermengt
(NCO/OH-Verhältnis 1 : 1).

Vergleichsbeispiel 2 (nicht erfindungsgemäß)

enthält
45,1 Gewichtsteile der Komponente (A1) (wie vorstehend),
43,3 Gewichtsteile aus Lösung gefälltes, mit Fettsäure gecoatetes Calciumcarbonat,
3 Gewichtsteile Borsilikat-Glashohlkugeln,
8,6 Gewichtsteile Zeolith-A-Pulver sowie
Dialkylzinnmercaptid in katalytischen Mengen und wurde mit 17,93 Gewichtsteilen technischem MDI innig vermengt
(NCO/OH-Verhältnis 1 : 1).
Es wurden folgende Prüfungsverfahren durchgeführt:

9

**1. Beurteilung der Klebstoffe zur Verbindung von Holz und Holzwerkstoffen (DIN 68602)**

Dazu werden Holzprüfkörper teilweise überlappend miteinander verklebt. Diese werden nach vorgeschriebener Lagerung in eine Zerreißmaschine (Zwick) eingespannt und bis zur Zerstörung der Klebeverbindung belastet. Je nach vorheriger Lagerung und gemessener Belastbarkeit lassen sich die Klebstoffe in verschiedenen Gruppen einteilen. So sind Klebstoffe in der Gruppe B3 für Innenräume mit kurzzeitig hoher Luftfeuchte und kurzzeitiger Wassereinwirkung sowie Außenverwendung geeignet. Klebstoffe der Gruppe B4 sind für Innenräume mit extremen Klimaschwankungen und Wassereinwirkung (z.B. Hallenbäder, Duschkabinen) sowie bei Außenverwendung mit hohen klimatischen Einflüssen geeignet. In Anlehnung an diese DIN-Vorschrift erfolgt der Test auf Wärmestandfestigkeit bei 90 °C.

**2. Reißfestigkeit und Reißdehnung**

Zur Bestimmung der inneren Reißfestigkeit und Reißdehnung wurden knochenförmige Prüfkörper aus dem ausgehärteten Universalklebespachtel ebenfalls in die Zerreißmaschine eingespannt und bis zur Zerstörung belastet (in Anlehnung an die DIN 53504).

**3. Shore D-Härte**

Bei der Shore D-Härte wird die Nadelpenetration an einem aus ausgehärtetem Universalklebespachtel bestehendem Prüfkörper nach DIN 53505 gemessen.

**4. Dornbiegetest**

Des weiteren wurde ein Dornbiegetest durchgeführt. Dabei wird die angerührte Spachtelmasse mit einem Rakel in einer definierten Schichtstärke auf ein 1 mm starkes, entfettetes Stahlblech mit den Abmessungen 5 x 20 cm aufgezogen. Diese Prüfkörper werden 7 Tage bei 40 °C gelagert, anschließend auf 20 °C temperiert und über einen Dorn von 5 cm Durchmesser um 180° gebogen. Beurteilt wurden Rißbildung, Abplatzungen etc..

Bei nicht quantifizierbaren Tests wie dem Dornbiegetest, der Mischbarkeit, der Standfestigkeit, der Verarbeitbarkeit und der Bearbeitbarkeit wurde eine Skala von sehr gut (= + + +) bis sehr schlecht (= ---) verwendet.

Bei dem als Polyolkomponente (A1) eingesetzten Produkt mit dem Handelsnamen Sovermol[R] POL 1080 V handelt es sich um verzweigtkettige Ester- und Ethergruppen aufweisende Polyole mit einer Viskosität von 4 200 mPas (nach Höppler) bei 20 °C, einer mittleren Funktionalität von etwa 2,5 und einer OH-Zahl von ca. 160 bis 170. Die Verseifungszahl beträgt etwa 145 und der Flammpunkt liegt über 200 °C. Das mittlere Äquivalentgewicht beträgt ca. 330 bis 350.

| Test | Beispiele (erfindungsgemäß) | | | | | | Vergleichsbeispiele | |
|---|---|---|---|---|---|---|---|---|
| | 1 | 2 | 3 | 4 | 5 | 6 | 1 | 2 |
| Klebfestigkeit DIN 68602 B3 | 5,3 | 5,7 | 5,0 | 5,1 | 5,7 | 6,2 | <0,5 | 5,0 |
| Klebfestigkeit DIN 68602 B4 | 4,3 | 4,6 | 5,4 | 5,7 | 4,9 | 5,0 | 2,0 | 4,3 |
| Wärmestandfestigkeit in Anlehnung an DIN 68602 bei 90 °C | 5,1 | 5,0 | 6,6 | 6,2 | 5,7 | 6,2 | 6,7 | 4,1 |
| Shore D-Härte bei 20 °C nach 6 h | >10 | >10 | >10 | >10 | >10 | >10 | | |
| Shore D-Härte bei 20 °C nach 24 h | >35 | >35 | >35 | >35 | >35 | >35 | | |
| Shore D-Härte bei 20 °C nach 7 d | 63 | 66 | 69 | 61 | 62 | 64 | 64 | 64 |
| Dornbiegetest 1mm | +++ | +++ | +++ | ++ | +++ | +++ | + | +++ |
| Dornbiegetest 2 mm | +++ | ++ | ++ | - | +++ | + | --- | - |
| Mischbarkeit (A) + (B) | + | + | - | 0 | + | +++ | +++ | -- |
| Standfestigkeit | + | + | 0 | 0 | + | ++ | --- | + |
| Verarbeitbarkeit | + | + | 0 | + | + | ++ | +++ | -- |
| Bearbeitbarkeit | + | + | - | ++ | ++ | +++ | -- | 0 |

Alle Festigkeitswerte sind in der Einheit N/mm$^2$ angegeben. Die Shore-Härte ist dimensionslos.

Sämtliche erfindungsgemäßen Beispiele
- hatten eine Topfzeit von etwa 10 bis 20 Minuten,
- waren nach 6 Stunden Härtezeit hantiertrocken und bearbeitbar,
- wiesen eine Zug- bzw. Scherfestigkeit bei 20 °C von mindestens 1 N/mm$^2$ und nach 3 Stunden von mindestens 3 N/mm$^2$ nach 6 Stunden Aushärtezeit auf,
- hatten eine Reißfestigkeit von mindestens 10 N/mm$^2$ und eine Reißdehnung von mindestens 10 %,

EP 0 494 219 B1

- waren volumenstabil, das heißt wiesen kein Schrumpfen oder Expandieren beim Härtungsprozeß auf,
- waren mit anorganischen Pigmenten (Eisenoxide und/oder Ruß) einfärbbar,
- ließen sich problemlos mit folgenden Anstrichmitteln überstreichen
  Polyurethanlacke (1- und 2-komponentig),
  Acrylatlacke,
  Alkydharzlacke,
  Nitrolacke und
  Epoxylacke.

Die erfindungsgemäßen Holzklebespachtel nach den Beispielen 1 bis 6 wurden darüber hinaus für folgende Anwendungszwecke mit besten Ergebnissen eingesetzt:

- zur Reparatur ausgebrochener Türscharniere an Schranktüren
- zur Restaurierung alter Möbel (Ausfüllen und Verkleben von Rissen, Ausgleich von Substanzverlusten),
- als Materialersatz von angefaulten oder wurmstichigen Teilen bei Fenster- und Türrahmen aus Holz, insbesondere im Außenbereich,
- bei der Verklebung von Fliesen und Kacheln auf Holz und/oder mineralischen Untergründen,
- bei der Verklebung von Kunststoffbödenbelägen auf Estrich, Holz und/oder Beton,
- bei der Verklebung von dekorativen kunststoffbeschichteten (DKS)-Spanplatten miteinander ohne Preßdruck,
- beim Füllen von Löchern in Putz- und Mauerwerk,
- beim Verkleben von geschäumtem Polystyrol, z.B. Isoliertapeten oder Dekorplatten auf mineralischen Untergründen wie Wand- und Deckenputz ohne mechanische Fixierung.

Verklebte oder ausgebesserte Weich- und Harthölzer mit den Universalklebespachteln nach Beispielen 1 bis 6, welche nach der Aushärtung des Spachtels mit handelsüblichen Holzschutzmitteloberflächen behandelt wurden, wurden sowohl einer Freibewitterung als auch einer 700stündigen künstlichen Bewitterung (Xenon-Test) ausgesetzt. Es zeigten sich anschließend keine wesentlichen Veränderungen des Werkstücks, das heißt der ausgehärtete Spachtel löste sich nicht vom Substrat und zeigt selber keine Volumenänderung, kein Bröseln, kein Abplatzen und keine Risse. Mit den erfindungsgemäßen Universalklebespachteln ausgebesserte Holzteile waren an den ausgebesserten bzw. mit Spachtel gefüllten Stellen ohne weiteres mit spanabhebenden Methoden bearbeitbar wie Sägen, Fräsen, Schleifen, Bohren, Raspeln, Hobeln, Schnitzen und/oder Gewindeschneiden.

Des weiteren wurden mit den erfindungsgemäßen Universalklebespachteln nach Beispielen 1 bis 6 folgende Substrate miteinander verklebt: Kupfer/Kupfer, Zink/Zink, Aluminium/Aluminium und Stahl/Stahl. Alle diese Verbindungen wiesen Scherfestigkeiten von >15 N/mm$^2$ auf.

Des weiteren wurden folgende Substrate miteinander verklebt: Polycarbonat/Polycarbonat, Hart-PVC/Hart-PVC, Weich-PVC/Weich-PVC, Glas/Glas, Acrylglas/Acrylglas und Phenolharz/Phenolharz. Alle diese Verbindungen wiesen Scherfestigkeiten >5 N/mm$^2$ auf.

**Patentansprüche**

1. Feinteilige Füllstoffe in hoher Pigmentvolumenkonzentration enthaltende, gewünschtenfalls lösungsmittelfreie 2-Komponenten-Polyurethan-Spachtelmassen mit einer Füllstoffkonzentration von 40 bis 70 Gew.-%, bezogen auf die Summe von Polyolkomponente (A) plus Füllstoffe, auf Basis einer polyfunktionellen Isocyanatkomponente (B) und einer bei Raumtemperatur flüssigen Polyolkomponente (A), die aus Isocyanat-reaktive Hydroxylgruppen enthaltenden Mischungskomponenten mit einem zumindest überwiegenden Anteil an verzweigtkettigen Ester- und Ethergruppen aufweisenden Polyolen (A1) besteht, wenigstens einen Anteil der feinteiligen Füllstoffe sowie gegebenenfalls der Additive enthält und zur Applikation mit der Isocyanatkomponente (B) abgemischt und als noch formgebend verarbeitbares Gemisch appliziert wird, dadurch gekennzeichnet, daß zur Ausbildung eines weitgehend wasserfesten, elastischen Universalklebespachtels, der hohe Klebefestigkeit mit hoher Volumenstabilität verbindet, die Polyolkomponente (A) als zusätzliche Mischungskomponente (A2) bei Raumtemperatur flüssige Glycerinester mit einer Ort-Funktionalität von wenigstens 2 bis 3 auf Basis langkettiger, gegebenenfalls olefinisch ungesättigter Fettsäuren, die wenigstens zum überwiegenden Teil OH-substituiert sind und gewünschtenfalls als weitere zusätzliche Mischungskomponente (A3) niedrigviskose, bei Raumtemperatur zumindest schwer-flüchtige monofunktionelle Alkohole ausgeprägt oleophilen Charakters mit mindestens 8 C-Atomen in Abmischung mit der Mischungskomponente (A1) enthält.

12

2. Universalklebespachtel nach Anspruch 1, dadurch gekennzeichnet, daß als Mischungskomponente (A1) verzweigtkettige, Ester- und Ethergruppen enthaltende Polyole mit einer Viskosität im Bereich von 3000 bis 5000 mPas bei 20 °C enthalten sind, wobei solche Polyole (A1) bevorzugt sind, die bei einer mittleren Funktionalität von 2,4 bis 2,6 eine OH-Zahl von 120 bis 200, vorzugsweise 165 ± 5, besitzen.

3. Universalklebespachtel nach Ansprüchen 1 und 2, dadurch gekennzeichnet, daß als Mischungskomponente (A2) Rizinusöl, insbesondere entwässertes gedämpftes Rizinusöl mit einer OH-Zahl von 165 ± 5 bei einer OH-Funktionalität von 2,5 bis 3, enthalten ist.

4. Universalklebespachtel nach Ansprüchen 1 bis 3, dadurch gekennzeichnet, daß die monofunktionellen Alkohole (A3) bei 20 °C eine Viskosität von 30 bis 250 mPas, vorzugsweise 50 bis 150 mPas, aufweisen.

5. Universalklebespachtel nach Ansprüchen 1 bis 4, dadurch gekennzeichnet, daß als Mischungskomponente (A3) verzweigte Alkanole mit wenigstens 12 C-Atomen und insbesondere mit wenigstens 16 C-Atomen vorliegen.

6. Universalklebespachtel nach Ansprüchen 1 bis 5, dadurch gekennzeichnet, daß die monofunktionellen Alkohole (A3) verzweigte aliphatische Alkanole mit OH-Zahlen von 160 bis 200 sind, wobei 2-Octyl-Dodecanol-1 bevorzugt ist.

7. Universalklebespachtel nach Ansprüchen 1 bis 4, dadurch gekennzeichnet, daß im Polyolgemisch das Mischungsverhältnis (Gewichtsteile) von (A1) : (A2) im Bereich von 10 : 1 bis 5 : 1 liegt und vorzugsweise 7 : 1 bis 8 : 1 liegt.

8. Universalklebespachtel nach Ansprüchen 1 bis 7, dadurch gekennzeichnet, daß die monofunktionellen Alkohole (A3) im Mischungsverhältnis (Gewichtsteile) von ((A1) + (A2)) : (A3) im Bereich von 90 : 10 bis 99 : 1, vorzugsweise im Bereich von 95 : 5 bis 97 : 3 vorliegen.

9. Universalklebespachtel nach Ansprüchen 1 bis 8, dadurch gekennzeichnet, daß die Isocyanatkomponente (B) des 2-Komponenten-Polyurethan-Systems polyfunktionelle Isocyanate, insbesondere mit einer Funktionalität von 2,0 bis 2,6, vorzugsweise von 2,3 bis 2,5, enthält.

10. Universalklebespachtel nach Ansprüchen 1 bis 9, dadurch gekennzeichnet, daß die Isocyanatkomponente (B) ein Isomerengemisch mit Diphenylmethan-4,4'-diisocyanat (MDI) als Hauptkomponente ist.

11. Universalklebespachtel nach Ansprüchen 1 bis 10, dadurch gekennzeichnet, daß sie Reaktivkomponenten (A) und (B) in solchen Mengen enthalten, die ein Molverhältnis von NCO- zu OH-Gruppen von 100 : 100 bis 110 : 100, vorzugsweise 104 : 100 bis 106 : 100 aufweisen.

12. Universalklebespachtel nach Ansprüchen 1 bis 11, dadurch gekennzeichnet, daß die feinteiligen Füllstoffe in Mengen von 50 bis 60 Gew.-%, bezogen auf die Summe Polyolkomponente (A) plus Füllstoffe, vorliegen.

13. Universalklebespachtel nach Ansprüchen 1 bis 12, dadurch gekennzeichnet, daß sie globuläre Partikel auf Glas- und/oder Kunststoffbasis als mindestens einen Anteil des Füllstoffgemisches enthalten.

14. Universalklebespachtel nach Ansprüchen 1 bis 13, dadurch gekennzeichnet, daß die globulären Partikel auf Glas und/oder Kunststoffbasis mindestens 10 %, insbesondere 30 bis 80 %, vorzugsweise 35 bis 55 % - jeweils bezogen auf das Gesamtvolumen der Füllstoffe - ausmachen.

15. Universalklebespachtel nach Ansprüchen 1 bis 14, dadurch gekennzeichnet, daß sie als globuläre Partikel Hohlkugeln, vorzugsweise mit einem mittleren Durchmesser im Bereich von 10 bis 150 $\mu$m, insbesondere im Bereich von 40 bis 100 $\mu$m und bevorzugt im Bereich von 50 bis 70 $\mu$m enthalten.

16. Universalklebespachtel nach Ansprüchen 1 bis 15, dadurch gekennzeichnet, daß sie Mikrohohlkugeln aus Borsilikatglas und/oder thermoplastischen Kunststoffen, insbesondere auf PVDC-Basis, enthalten.

17. Universalklebespachtel nach Ansprüchen 1 bis 16, dadurch gekennzeichnet, daß das Füllstoffgemisch zusätzlich weitere feinteilige, gegebenenfalls nicht-globuläre Partikel aus anorganischem Material und/oder Kunststoffen enthält.

18. Universalklebespachtel nach Ansprüchen 1 bis 17, dadurch gekennzeichnet, daß sie als feinteilige, gegebenenfalls nicht-globuläre Partikel Kunststoffpulver, insbesondere auf PVC-Basis, enthalten.

19. Universalklebespachtel nach Ansprüchen 1 bis 18, dadurch gekennzeichnet, daß sie als feinteilige, gegebenenfalls nicht globuläre Partikel mineralische Stoffe, vorzugsweise gecoatete mineralische Stoffe, insbesondere gecoatete Kreide, enthalten.

20. Universalklebespachtel nach Ansprüchen 1 bis 19, dadurch gekennzeichnet, daß sie als Füllstoff auf Kreidebasis ein aus Lösung gefälltes und mit Fettsäure gecoatetes Calciumcarbonat mit einer bevorzugten mittleren Teilchengröße im Bereich von 0,5 bis 1 $\mu$m enthalten.

21. Universalklebespachtel nach Ansprüchen 1 bis 20, dadurch gekennzeichnet, daß sie als einen Füllstoffanteil Trockenmittel enthalten, wobei der Anteil dieses Trockenmittels bevorzugt bis zu 20 Gew.-% des Füllstoffgemisches ausmacht.

22. Universalklebespachtel nach Ansprüchen 1 bis 21, dadurch gekennzeichnet, daß sie als Trockenmittel wenigstens anteilsweise von Kristallwasser-befreites Zeolith A enthalten.

23. Universalklebespachtel nach Ansprüchen 1 bis 22, dadurch gekennzeichnet, daß die Reaktivkomponente (B) zumindest anteilsweise nicht-reaktive Komponenten, insbesondere Füllstoff, enthält;

24. Universalklebespachtel nach Ansprüchen 1 bis 23, dadurch gekennzeichnet, daß die Reaktivkomponente (A) und die Reaktivkomponente (B) jeweils Füllstoffe in Mengen enthalten, die so gewählt sind, daß eine Mischung der gefüllten Reaktivkomponenten (A) und (B) im Verhältnis von 3 : 1 bis 1 : 1 Volumenanteilen den anwendungsfertigen Universalklebespachtel ergibt.

25. Universalklebespachtel nach Ansprüchen 1 bis 24, dadurch gekennzeichnet, daß sie zusätzlich als Additiv übliche Reaktionsbeschleuniger, vorzugsweise Organometallverbindungen beispielsweise des Zinns, des Quecksilbers und/oder des Wismuts enthalten.

26. Universalklebespachtel nach Ansprüchen 1 bis 25, dadurch gekennzeichnet, daß sie als Reaktionsbeschleuniger Dialkylzinnmercaptide enthalten.

27. Universalklebespachtel nach Ansprüchen 1 bis 26, dadurch gekennzeichnet, daß sie weitere übliche Additive wie Verdicker, Alterungsschutzmittel, Weichmacher, Pigmente, Thixotropiermittel und/oder UV-Schutzmittel enthalten.

28. Universalklebespachtel nach Ansprüchen 1 bis 27, dadurch gekennzeichnet, daß die Reaktivkomponenten (A) und (B) zusammen mit den darin enthaltenen Füllstoffen und gegebenenfalls Additiven wasserfrei, vorzugsweise in Wasserdampf undurchlässigen Verpackungen gelagert sind.

29. Verwendung der erfindungsgemäßen Universalklebespachtel zum Füllen und/oder Verkleben von Holz, Kunststoff, Metall und/oder anderen festen Werkstoffen.

## Claims

1. Optionally solventless two-component polyurethane surfacers containing fine-particle fillers in a high pigment volume concentration (filler concentration 40 to 70% by weight, based on the sum of polyol component (A) plus fillers) based on a polyfunctional isocyanate component (B) and a polyol component (A) which is liquid at room temperature and which consists of mixture components containing isocyanate-reactive hydroxyl groups with an at least predominant content of branched-chain polyols (A1) containing ester and ether groups, which contains at least a proportion of the fine-particle fillers and, optionally, the additives and which, for application, is mixed with the isocyanate component (B) and applied as a mixture which can still be processed by shaping, characterized in that, to form a

14

substantially waterproof, elastic multipurpose adhesive surfacer which combines high bond strength with high volume stability, the polyol component (A) contains glycerol esters which are liquid at room temperature and have an OH functionality of at least 2 to 3 and which are based on long-chain, optionally olefinically unsaturated and at least predominantly OH-substituted fatty acids as an additional mixture component (A2) and, if desired, low-viscosity monofunctional alcohols of distinctly oleophilic character, which are at least substantially involatile at room temperature, in admixture with component (A1) as another additional mixture component (A3).

2. Multipurpose adhesive surfacers as claimed in claim 1, characterized in that they contain as component (A1) branched-chain polyols containing ester and ether groups having a viscosity of 3,000 to 5,000 mPas at 20°C, polyols (A1) which have an OH value of 120 to 200 and preferably 165 ± 5 for an average functionality of 2.4 to 2.6 being preferred.

3. Multipurpose adhesive surfacers as claimed in claims 1 and 2, characterized in that they contain castor oil and, in particular, dehydrated, steamed castor oil having an OH value of 165 ± 5 for an OH functionality of 2.5 to 3 as component (A2).

4. Multipurpose adhesive surfacers as claimed in claims 1 to 3, characterized in that the monofunctional alcohols (A3) have a viscosity at 20°C of 30 to 250 mPas and preferably 50 to 150 mPas.

5. Multipurpose adhesive surfacers as claimed in claims 1 to 4, characterized in that branched alkanols containing at least 12 carbon atoms and, preferably, at least 16 carbon atoms are present as component (A3).

6. Multipurpose adhesive surfacers as claimed in claims 1 to 5, characterized in that the monofunctional alcohols (A3) are branched aliphatic alkanols having OH values of 160 to 200, 2-octyl-1-dodecanol being preferred.

7. Multipurpose adhesive surfacers as claimed in claims 1 to 4, characterized in that the mixing ratio (parts by weight) of (A1) to (A2) in the polyol mixture is from 10:1 to 5:1 and preferably from 7:1 to 8:1.

8. Multipurpose adhesive surfacers as claimed in claims 1 to 7, characterized in that the monofunctional alcohols (A3) are present in a mixing ratio (parts by weight) of ((A1) + (A2)) to (A3) in the range from 90:10 to 99:1 and preferably in the range from 95:5 to 97:3.

9. Multipurpose adhesive surfacers as claimed in claims 1 to 8, characterized in that the isocyanate component (B) of the two-component polyurethane system contains polyfunctional isocyanates, more particularly having a functionality of 2.0 to 2.6 and preferably 2.3 to 2.5.

10. Multipurpose adhesive surfacers as claimed in claims 1 to 9, characterized in that the isocyanate component (B) is an isomer mixture containing diphenyl methane-4,4'-diisocyanate (MDI) as principal component.

11. Multipurpose adhesive surfacers as claimed in claims 1 to 10, characterized in that they contain reactive components (A) and (B) in quantities which correspond to a molar ratio of NCO to OH groups of 100:100 to 110:100 and preferably 104:100 to 106:100.

12. Multipurpose adhesive surfacers as claimed in claims 1 to 11, characterized in that the fine-particle fillers are present in quantities of 50 to 60% by weight, based on the sum of polyol component (A) plus fillers.

13. Multipurpose adhesive surfacers as claimed in claims 1 to 12, characterized in that they contain globular glass-and/or plastic-based particles as at least part of the filler mixture.

14. Multipurpose adhesive surfacers as claimed in claims 1 to 13, characterized in that the globular glass-and/or plastic-based particles make up at least 10%, preferably 30 to 80% and more preferably 35 to 55%, based on the total volume of fillers.

**15.** Multipurpose adhesive surfacers as claimed in claims 1 to 14, characterized in that they contain hollow beads, preferably with an average diameter of about 10 to 150 $\mu$m, more preferably with an average diameter of about 40 to 100 $\mu$m and most preferably with an average diameter in the range from 50 to 70 $\mu$m as the globular particles.

**16.** Multipurpose adhesive surfacers as claimed in claims 1 to 15, characterized in that they contain hollow microbeads of borosilicate glass and/or thermoplastics, more particularly based on PVDC.

**17.** Multipurpose adhesive surfacers as claimed in claims 1 to 16, characterized in that the filler mixture additionally contains other fine-particle, optionally non-globular particles of inorganic material and/or plastics.

**18.** Multipurpose adhesive surfacers as claimed in claims 1 to 17, characterized in that they contain polymer powders, more particularly based on PVC, as the fine-particle optionally non-globular particles.

**19.** Multipurpose adhesive surfacers as claimed in claims 1 to 18, characterized in that they contain mineral substances, preferably coated mineral substances, more particularly coated chalk, as the fine-particle optionally non-globular particles.

**20.** Multipurpose adhesive surfacers as claimed in claims 1 to 19, characterized in that they contain a calcium carbonate precipitated from solution and coated with fatty acid with a preferred average particle size of 0.5 to 1 $\mu$m as the chalk-based filler.

**21.** Multipurpose adhesive surfacers as claimed in claims 1 to 20, characterized in that they contain drying agents as part of the filler, the drying agent preferably contributing up to 20% by weight of the filler mixture.

**22.** Multipurpose adhesive surfacers as claimed in claims 1 to 21, characterized in that they contain zeolite A at least partly freed from water of crystallization as the drying agent.

**23.** Multipurpose adhesive surfacers as claimed in claims 1 to 22, characterized in that reactive component (B) contains at least partly non-reactive components, more particularly filler.

**24.** Multipurpose adhesive surfacers as claimed in claims 1 to 23, characterized in that reactive component (A) and reactive component (B) each contain fillers in quantities selected so that a mixture of the filled reactive components (A) and (B) in a ratio of 3:1 to 1:1 parts by volume forms the ready-to-use multipurpose adhesive surfacer.

**25.** Multipurpose adhesive surfacers as claimed in claims 1 to 24, characterized in that they additionally contain typical reaction accelerators, preferably organometallic compounds, for example of tin, mercury and/or bismuth as an additive.

**26.** Multipurpose adhesive surfacers as claimed in claims 1 to 25, characterized in that they contain dialkyl tin mercaptides as the reaction accelerator.

**27.** Multipurpose adhesive surfacers as claimed in claims 1 to 26, characterized in that they contain other typical additives, such as thickeners, antiagers, plasticizers, pigments, thixotropic agents and/or UV stabilizers.

**28.** Multipurpose adhesive surfacers as claimed in claims 1 to 27, characterized in that reactive components (A) and (B) together with the fillers and optionally additives present therein are stored in the absence of water, preferably in packs impermeable to water vapour.

**29.** The use of the multipurpose adhesive surfacers according to the invention for the filling and/or bonding of wood, plastics, metals and/or other solid materials.

16

EP 0 494 219 B1

**Revendications**

1.  Mastic polyuréthannique à 2 composants, éventuellement sans solvants, contenant des charges finement divisées à haute concentration volumique de pigment, avec une concentration de charge de 40 à 70 % en poids par rapport à la somme du composant polyol (A) et des charges, à base d'un composant isocyanate polyfonctionnel (B) et d'un composant polyol (A) liquide à température ambiante, dont les constituants présentent des groupes hydroxyle réactifs vis-à-vis des isocyanates avec une part au moins prépondérante de polyols (A1) présentant des groupes ester et des groupes éther à chaîne ramifiée, contenant au moins une part des charges finement divisées ainsi qu'éventuellement une part d'additifs, que l'on mélange pour l'application avec le composant (B) et que l'on applique sous forme de mélange encore façonnable, caractérisé en ce que, pour former un mastic universel élastique présentant une grande résistance à l'eau et présentant à la fois un pouvoir adhésif élevé et une grande stabilité volumique, le composant (A) contient comme composant de mélange supplémentaire (A2) un ester glycérique liquide à température ambiante, possédant une fonctionnalité OH d'au moins 2 à 3 à base d'acides gras à longue chaîne éventuellement à insaturation oléfinique, substitués par OH à raison d'une part au moins prépondérante et, le cas échéant, comme autres composants de mélange (A3), des alcools monofonctionnels de faible viscosité, au moins difficilement volatils à température ambiante, a caractère oléophile prononcé avec au moins 8 atomes de carbone en mélange avec le composant de mélange (A1).

2.  Mastic universel selon la revendication 1, caractérisé en ce qu'il contient comme composant de mélange (A1) des polyols à chaîne ramifiée contenant des groupes ester et des groupes éther avec une viscosité de 3000 à 5000 mPas à 20°C, les polyols (A1) qui possèdent, pour une fonctionnalité moyenne de 2,4 à 2,6 un indice d'OH de 120 à 200, de préférence de 165 ± 5 étant préférés.

3.  Mastic universel selon les revendications 1 et 2, caractérisé en ce qu'il contient comme composant de mélange (A2) de l'huile de ricin, en particulier de l'huile de ricin déshydratée après vaporisation, avec un indice d'OH de 165 ± 5 pour une fonctionnalité OH de 2,5 à 3.

4.  Mastic universel selon les revendications 1 à 3, caractérisé en ce que les alcools monofonctionnels (A3) présentent une viscosité de 30 à 250 mPas, de préférence de 50 à 150 mPas à 20°C.

5.  Mastic universel selon les revendications 1 à 4, caractérisé en ce que des alcools à chaîne ramifiée avec au moins 12 atomes de carbone et en particulier avec au moins 16 atomes de carbone sont présents comme composant de mélange (A3).

6.  Mastic universel selon les revendications 1 à 5, caractérisé en ce que les alcools monofonctionnels (A3) sont des alcanols aliphatiques à chaîne ramifiée avec des indice d'OH de 160 à 200, le 2-octyldodécanol-1 étant préféré.

7.  Mastic universel selon les revendications 1 à 4, caractérisé en ce que le rapport de mélange (A1):(A2) dans le mélange de polyols est (en parties en poids) de 10:1 à 5:1 et de préférence de 7:1 à 8:1.

8.  Mastic universel selon les revendications 1 à 7, caractérisé en ce que les alcools monofonctionnels (A3) sont présents dans un rapport de mélange ((A1) + (A2)) / (A3) de 90:10 à 99:1, de préférence de 95:5 à 97:3.

9.  Mastic universel selon les revendications 1 à 8, caractérisé en ce que le composant isocyanate (B) du système polyuréthannique à 2 composants contient des isocyanates polyfonctionnels, en particulier avec une fonctionnalité de 2,0 à 2,6, de préférence de 2,3 à 2,5.

10. Mastic universel selon les revendications 1 à 9, caractérisé en ce que le composant isocyanate (B) est un mélange d'isomères avec le diphénylméthane-4,4'-diisocyanate (MDI) comme composant principal.

11. Mastic universel selon les revendications 1 à 10, caractérisé en ce qu'il contient les composants réactifs (A) et (B) en quantités telles qu'ils présentent un rapport molaire entre les groupes NCO et les groupes OH de 100:100 à 110:100, de préférence 104:100 à 106:100.

**12.** Mastic universel selon les revendications 1 à 11, caractérisé en ce que les charges finement divisées sont présentes en quantités de 50 à 60% en poids par rapport à la somme du composant polyol (A) plus les charges.

**13.** Mastic universel selon les revendications 1 à 12, caractérisé en ce qu'il contient des particules globulaires à base de verre et/ou de substances synthétiques pour au moins une part du mélange de charges.

**14.** Mastic universel selon les revendications 1 à 13, caractérisé en ce que les particules globulaires à base de verre et/ou de substances synthétiques représentent au moins 10%, en particulier 30 à 80%, de préférence environ 35 à 55%, par rapport au volume total des charges.

**15.** Mastic universel selon les revendications 1 à 14, caractérisé en ce qu'il contient comme particules globulaires des microbilles, de préférence avec un diamètre moyen de 10 à 150 $\mu$m, en particulier de 40 à 100 $\mu$m et, de préférence, de 50 à 70 $\mu$m.

**16.** Mastic universel selon les revendications 1 à 15, caractérisé en ce qu'il contient des microbilles en verre de silicate de bore et/ou de substances synthétiques thermoplastiques, en particulier à base de PVDC.

**17.** Mastic universel selon les revendications 1 à 16, caractérisé en ce que le mélange de charges contient, de plus, d'autres particules non globulaires finement divisées de substance inorganique et/ou d'autres substances synthétiques.

**18.** Mastic universel selon les revendications 1 à 17, caractérisé en ce qu'il contient comme particules finement divisées, éventuellement non globulaires, des poudres de substance synthétique, en particulier à base de PVC.

**19.** Mastic universel selon les revendications 1 à 18, caractérisé en ce qu'il contient comme particules finement divisées, éventuellement non globulaires, des substances minérales, de préférence des substances minérales enrobées, en particulier de la craie enrobée.

**20.** Mastic universel selon les revendications 1 à 19, caractérisé en ce qu'il contient comme charge à base de craie un carbonate de calcium précipité en solution et enrobé d'un acide gras, avec de préférence une taille moyenne des particules de 0,5 à 1 $\mu$m.

**21.** Mastic universel selon les revendications 1 à 20, caractérisé en ce qu'il contient comme part de charge un siccatif, la part de ce siccatif étant de préférence jusqu'à 20% en poids du mélange de charges.

**22.** Mastic universel selon les revendications 1 à 21, caractérisé en ce qu'il contient comme siccatif au moins une part de zéolite A dont au moins une partie de l'eau de cristallisation a été enlevée.

**23.** Mastic universel selon les revendications 1 à 22, caractérisé en ce que le composant réactif (B) contient au moins une part de composants non réactifs, en particulier des charges.

**24.** Mastic universel selon les revendications 1 à 23, caractérisé en ce que le composant réactif (A) et le composant réactif (B) contient chaque fois des charges en quantités choisies de telle manière que le mastic universel prêt à l'application est obtenu à partir d'un mélange des composants réactifs (A) et (B) chargés dans un rapport en volume de 3:1 à 1:1.

**25.** Mastic universel selon les revendications 1 à 24, caractérisé en ce qu'il contient, de plus, comme additifs, des accélérateurs de réaction usuels, de préférence des composés organométalliques, par exemple d'étain, de mercure et/ou de bismuth.

**26.** Mastic universel selon les revendications 1 à 25, caractérisé en ce qu'il contient comme accélérateur de réaction du mercaptide de dialkylétain.

**27.** Mastic universel selon les revendications 1 à 26, caractérisé en ce qu'il contient d'autres additifs usuels comme des épaississants, des additifs antivieillissement, des plastifiants, des pigments, des agents de thixotropie et/ou des agents de protection contre les UV.

**28.** Mastic universel selon les revendications 1 à 27, caractérisé en ce que les composants réactifs (A) et (B) sont entreposés ensemble avec les charges et éventuellement les additifs qui y sont contenus à l'abri de l'eau, de préférence dans des emballages étanches à la vapeur d'eau.

**29.** Utilisation des mastics universels selon l'invention pour colmater et/ou coller le bois, les substances synthétiques, le métal et/ou d'autres matériaux solides.